# DEMANDE DE BREVET EUROPEEN

(11) **EP 4 654 590 A1**
(43) Date de publication de la demande: **26.11.2025**
(21) Numéro de dépôt: 25171100.8
(22) Date de dépôt: 16.04.2025
(51) Int. Cl.: H04N 21/2187, H04N 21/262, H04N 21/4402, H04N 21/61, H04N 21/6587, H04N 21/845, H04N 21/266

(54) **PROCÉDÉ DE GESTION DE LA LECTURE D'UN CONTENU MULTIMÉDIA**

(30) Priorité: 21.05.2024 FR 2405142
(71) Demandeur: Orange, 92130 Issy-les-Moulineaux (FR)
(72) Inventeur: MARCHAND, Hervé, 92326 Chatillon (FR); GASTE, Olivier, 92326 Chatillon (FR)

(57) **Abrégé**

L'invention concerne un procédé de gestion de la lecture par un dispositif de lecture de segments d'un contenu accessibles depuis des sources de contenu aptes à transmettre des segments d'un même contenu avec un décalage temporel, caractérisé en ce qu'au cours d'une lecture du contenu depuis une première source (n-CDN) avec une vitesse de lecture, dite vitesse de référence, une réception d'une commande de retour en arrière dans le contenu est suivie d'une lecture de segments depuis une deuxième source (SU) avec une vitesse différente de la vitesse de référence, la lecture du contenu se poursuivant en lisant des segments issus de la première source (n-CDN) lorsque les segments à lire sont disponibles depuis la première source (n-CDN).

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de lecture d'un contenu multimédia.

Dans l'exemple qui servira à illustrer l'invention, les contenus sont des contenus découpés en segments associés à plusieurs débits d'encodage respectifs sélectionnables sur requêtes émises depuis un dispositif de lecture de flux multimédias.

Les contenus visés ici sont accessibles depuis plusieurs sources de données (des serveurs par exemple) ; les sources ont la particularité de transmettre des contenus avec un décalage temporel ; par exemple une source met à disposition de dispositifs de lecture STB un contenu en temps réel (ou en Live) ; une autre source par exemple émet en unicast et peut sur requête transmettre le même contenu ultérieurement en différé, par exemple lorsqu'un retour arrière (rewind en anglais) est requis.

Un dispositif de lecture vise tout dispositifs aptes à recevoir des flux multimédias par exemple un décodeur, un téléphone mobile, une tablette, etc.

### Etat de la technique

Il arrive parfois de manquer le début d'un programme télévisé (film, série, etc.). Une fonction appelée « lire du début » ou « rattrapage » (appelée également « Start Over » ou « Restart » par l'homme du métier) permet de reprendre, à tout moment, le programme en cours de diffusion depuis son commencement ou depuis un instant précis par exemple pour lire une scène particulière. Par exemple, si un film commence à 20h50 sur un canal de diffusion (une chaîne de télévision) et qu'un utilisateur zappe sur cette chaîne de télévision à 21h17, il peut lancer la fonction de "start over" afin de pouvoir lire le contenu depuis son début.

Généralement, la diffusion de contenus en temps réel (aussi appelé « Live » ou « direct ») s'appuie sur une technologie de diffusion en multidiffusion (aussi appelé diffusion « multipoint » ou « diffusion de groupe » ou encore « Multicast » par l'homme du métier). Cette technologie permet d'économiser énormément de bande passante dans le réseau d'un opérateur qui gère la diffusion car le contenu est répliqué au plus près des dispositifs de lecture. Par contre, quand un dispositif de lecture requiert l'utilisation de la fonction « lire du début », un accès au contenu demandé déclenche un basculement automatique de la technologie multicast vers une technologie de diffusion de contenu en point à point (unicast) qui est beaucoup plus consommatrice en bande passante dans le réseau d'un opérateur de télécommunications.

A partir du moment où l'utilisateur active la fonction de « lire du début » et qu'un retour en arrière a été exécuté, le dispositif de lecture reste sur un flux unicast et consomme uniquement ce flux unicast et ce jusqu'au prochain changement de chaîne (zapping) ou action de retour au direct. Or, l'utilisation d'un flux unicast va entraîner une utilisation de bande passante qui peut être énorme si le nombre de retour en arrière issus de plusieurs dispositifs de lecture s'exécute en même temps par exemple lorsque le contenu concerne un événement d'ampleur.

L'invention offre une solution ne présentant pas les inconvénients de l'état de la technique.

### L'invention

A cet effet, selon un premier aspect fonctionnel, l'invention a pour objet un procédé de gestion de la lecture ; par un dispositif de lecture, de segments d'un contenu accessibles depuis des sources de contenu aptes à transmettre des segments d'un même contenu avec un décalage temporel, caractérisé en ce qu'au cours d'une lecture du contenu depuis une première source avec une vitesse de lecture, dite vitesse de référence, une réception d'une commande de retour en arrière dans le contenu est suivie d'une lecture de segments depuis une deuxième source avec une vitesse différente de la vitesse de référence, et d'une poursuite de la lecture de segments issus de la première source lorsque les segments à lire sont disponibles depuis la première source.

Selon l'invention, la lecture des segments issus de la deuxième source est modifiée par rapport à une vitesse de référence ; cette modification de la vitesse qui peut être une accélération de la lecture de segments permet de rattraper le flux issu de la première source et de poursuivre la lecture à la base des segments issus de la première source. L'invention limite l'usage de la deuxième source pour la lecture du contenu.

A noter que dans le cas où la vitesse différente visée ci-dessus concerne une accélération de la lecture, idéalement la vitesse sera choisie telle sorte que la restitution accélérée est quasi imperceptible pour l'œil humain.

Selon un premier mode de réalisation, une lecture avec une vitesse différente est effectuée que si la durée de retour en arrière est inférieure à une durée donnée, dite première durée. L'exécution d'une lecture avec une vitesse différente est dans ce cas conditionnelle ; la condition étant que la durée de retour en arrière dans le contenu n'excède pas une durée donnée, ce de manière à éviter un rattrapage qui ne sera pas possible. Par exemple, si l'utilisateur fait un retour arrière de 45mn sur un contenu ayant une durée de 60 mn, il est inutile de chercher à rattraper le flux issu du premier serveur car cela impliquerait une vitesse de lecture accélérée beaucoup trop grande qui s'apparenterait à une avance rapide dans le contenu (en anglais Fast Forward ayant pour symbole « >> » sur la plupart des lecteurs de contenus multimédias) plutôt qu'à une lecture accélérée. En d'autres mots, la lecture de segments issus de la deuxième source (SU) s'effectue avec une vitesse différente si une poursuite de la lecture du contenu depuis la deuxième source est possible. Si le retour en arrière est trop important on comprend bien qu'un rattrapage du flux issu de la première source avec une vitesse accélérée raisonnable est quasi impossible. Par exemple, si l'utilisateur fait un retour arrière de 45mn sur un contenu de 60 mn, il est inutile d'accélérer la lecture et chercher à rattraper le flux issu de la première source (par exemple un flux Live) car il faudrait dans ce cas lire le contenu beaucoup trop rapidement ; or le but recherché est une restitution avec une vitesse de lecture légèrement accélérée pour que la restitution soit compréhensible par un utilisateur.

A noter qu'une vitesse de lecture accélérée est à distinguer d'une avance rapide ; une vitesse de lecture accélérée permettant une compréhension du contenu restitué.

Selon un deuxième mode de réalisation, qui pourra être mis en œuvre alternativement ou cumulativement avec le précédent mode, la lecture de segments depuis la deuxième source s'effectue initialement avec la vitesse dite de référence et en ce qu'une vitesse différente est utilisée après une durée donnée, dite deuxième durée. Selon ce mode, la lecture avec une vitesse différente, par exemple une vitesse supérieure à la vitesse de référence, est réalisée après expiration de la deuxième durée assimilable à une durée de temporisation. Par exemple si l'utilisateur requiert un retour arrière de 30 secondes pour visualiser une séquence dans le passé, la lecture depuis l'instant de lecture demandé s'effectue initialement avec une vitesse normale de référence, et se poursuit avec une vitesse autre que la vitesse de référence dès que la séquence demandée est terminée. On peut considérer en effet que si l'utilisateur est intéressé par une séquence précise celui-ci appréciera une lecture à une vitesse normale de la séquence demandée.

Selon une variante du deuxième mode de réalisation, la deuxième durée est égale à la durée du retour dans le contenu. Par exemple si un retour arrière de 120 secondes est demandé, une lecture à la vitesse de référence s'effectue pendant 120 secondes, et à vitesse supérieure ensuite.

D'autres variantes sont bien sûr envisageables ; par exemple la durée donnée peut être choisie ne fonction de la durée de retour en arrière. Plus la durée de retour est grande plus la durée donnée est grande ; à l'inverse, plus la durée de retour et petite plus la durée donnée est petite.

Selon un troisième mode de réalisation, qui pourra être mis en œuvre alternativement ou cumulativement avec les précédents modes, la première source transmet le contenu en temps réel et la deuxième source est apte à transmettre le contenu en différé. Ce quatrième mode vise une configuration du système dans lequel l'invention trouve un intérêt certain à savoir une première source privilégiée pour la lecture du fait des avantages du multicast mais n'étant pas apte à faire de retour en arrière dans le contenu ; et une deuxième source permettant un retour dans le contenu donc une lecture en différée du même contenu diffusé en multicast ; une telle deuxième source est typiquement une source unicast.

Selon un quatrième mode de réalisation, qui pourra être mis en œuvre alternativement ou cumulativement avec les précédents modes, la première source est une entité de transformation transformant un flux multicast reçu d'un serveur multicast en un flux unicast. Ce mode vise une configuration optimale du procédé de l'invention dans lequel la deuxième source offre des avantages en termes de bande passante et de qualité d'images ; réaliser un enregistrement de segments issus d'un serveur multicast offre une qualité d'images lors de la lecture bien supérieure au mode unicast.

Selon un troisième mode de réalisation, qui pourra être mis en œuvre alternativement ou cumulativement avec les précédents modes, les sources fournissant des segments avec des qualités d'images respectives, ladite poursuite de la lecture de segments issus de la première source est réalisée lorsque les segments à lire sont disponibles depuis la première source et lorsque les segments concernés ont une qualité d'image supérieure à la qualité d'image des segments issus de la deuxième source. Ce mode permet de restituer des qualités d'images optimales lors de la poursuite de la lecture ; soit la lecture se poursuit depuis la deuxième source soit depuis la première source selon que les segments concernés par lecture ont une qualité plus ou moins grande.

Selon un aspect matériel, l'invention se rapporte à une entité de gestion de la lecture par un dispositif de lecture de segments d'un contenu accessibles depuis des sources de contenu aptes à transmettre des segments d'un même contenu avec un décalage temporel, l'entité comprenant un processeur configuré pour, au cours d'une lecture du contenu depuis une première source avec une vitesse de lecture, dite vitesse de référence, suite à la réception d'une commande de retour en arrière dans le contenu, lire les segments depuis une deuxième source avec une vitesse différente de la vitesse de référence, la lecture du contenu se poursuivant en lisant des segments issus de la première source lorsque les segments à lire sont disponibles depuis la première source.

Selon un autre aspect matériel, l'invention se rapporte à un dispositif de lecture incluant une entité de gestion telle que définie ci-dessus.

Selon un autre aspect matériel, l'invention se rapporte à un programme d'ordinateur apte à être mis en œuvre sur une entité telle que définie ci-dessus, le programme comprenant des instructions de code qui, lorsqu'il est exécuté par un processeur, réalise les étapes du procédé de gestion définies ci-dessus.

Selon un autre aspect matériel, l'invention se rapporte à un support de données sur lequel a été mémorisée au moins une série d'instructions de code de programme pour l'exécution d'un procédé tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif de lecture ;
[Fig. 3] La figure 3 illustre un mode de réalisation du procédé de l'invention faisant apparaître une exécution d'une commande de retour en arrière dans le contenu grâce au mode mode startover et du déclenchement d'une lecture accélérée du contenu issu de la deuxième source.

### Description détaillée d'un exemple de réalisation illustrant l'invention :

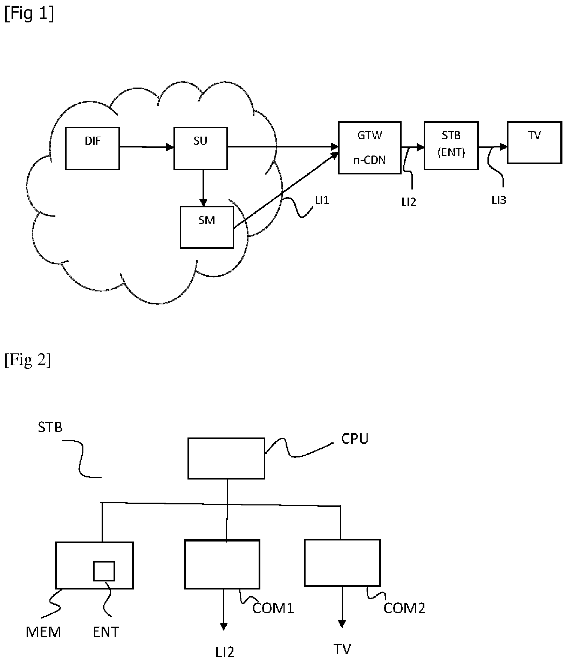

La figure 1 représente un système informatique SYS dans lequel est mis en œuvre un réseau de diffusion de contenus appelé CDN (Content Distribution Network) par l'homme du métier depuis lequel sont transmis des contenus à destination de dispositifs clients ou dispositifs de lecture de contenus.

Dans notre exemple, le système SYS comprend un seul dispositif de lecture STB. Cependant l'invention s'applique à un nombre quelconque de dispositifs de lecture.

Le dispositif de lecture dispositif de lecture STB est par exemple un décodeur de télévision numérique.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN géré par une passerelle domestique GTW.

La passerelle GTW est apte à communiquer via un réseau de télécommunication LI1 tel qu'un réseau étendu WAN connu de l'homme du métier.

Le CDN est constitué de serveurs reliés en réseau dans le réseau étendu.

Le contenu multimédia visé ici est un contenu multimédia correspondant à une chaîne de télévision sur laquelle sont diffusés des programmes télévisés.

Un contenu peut être initialement disponible sur une source DIF.

Cette source est connectée au réseau de diffusion de contenu, CDN (pour « Content Delivery Network »), qui forme, en quelque sorte, une surcouche (ou « overlay » en anglais), au réseau de télécommunication, tel qu'Internet. Le réseau de diffusion de contenu CDN comporte plusieurs serveurs de contenus distincts SU/SM aptes à transmettre un même contenu au dispositif de lecture dispositif de lecture STB avec un décalage dans le temps.

Dans notre exemple, un premier serveur est apte à transmettre un contenu en mode unicast, dit serveur unicast SU, et un second serveur SM est apte à transmettre le contenu en temps réel, par exemple en multicast.

L'invention ne se limite pas à cette configuration mais s'étend à tout serveur capable de transmettre des mêmes segments avec un décalage temporel.

La configuration décrite ci-dessus permet par exemple de recevoir un flux de segments en multicast, de requérir un retour en arrière dans le contenu et de poursuivre la lecture de segments issus du serveur unicast à partir du segment souhaité. On comprend bien qu'il y a un décalage temporel entre les segments diffusés par la source multicast et les segments reçus du serveur unicast.

Typiquement, les segments de la source DIF sont transmis au premier serveur unicast, et à un second serveur multicast. Le serveur multicast SM, ou « multicasteur », peut recevoir les segments du serveur unicast SU lorsqu'une décision est prise de rendre possible la transmission en multicast. Cette décision peut par exemple être prise par la première source de contenu, SU, ou par un dispositif de supervision, non représenté, ayant connaissance du nombre de dispositifs de lecture souhaitant recevoir un contenu donné.

Les contenus CNT sont mis à disposition dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le décodeur STB communique avec la passerelle via un module Ethernet pour une communication locale avec fils ou via un module radio de type WiFi pour une communication locale sans fils avec la passerelle résidentielle GTW. Le module en question est référencé COM1 sur la figure 2. Cette liaison est référencée LI2 sur la figure 1.

Le décodeur STB peut transmettre un contenu à restituer au dispositif de restitution TV via un module de communication COM2. Ce module COM2 est par exemple une liaison HDMI. Cette liaison est référencée LI3 sur la figure 1.

Le décodeur STB comprend une entité de téléchargement en mode streaming (non représentée) apte à gérer le téléchargement de segments. Le décodeur STB comprend également une entité de gestion ENT dont la fonction sera décrite ci-dessous.

En outre, le dispositif de lecture STB est équipé d'une fonction STRT « relire le contenu » (appelée aussi « startover » par l'homme du métier) est prévue pour relire un contenu en cours de diffusion.

Les serveurs ont une structure matérielle équivalente. Un serveur équipé d'au moins un processeur et de mémoires pour la réalisation de traitement informatique. Un serveur SRV communique avec la passerelle GTW via réseau WAN.

Le serveur unicast SU fournit des fichiers de description au dispositif de lecture STB à travers la passerelle GTW. A partir de ces fichiers de description, le dispositif de lecture STB peut transmettre des requêtes pour télécharger un segment de la résolution choisie parmi celles disponibles dans le dernier fichier de description reçu.

Le serveur multicast SM diffuse un flux continu du type flux IPTV ou équivalents. Le serveur multicast diffuse le contenu dans un arbre de diffusion , indépendamment des dispositifs de lecture STB inscrits pour leur obtention. Les nœuds de l'arbre de diffusion prennent en charge la transmission jusqu'aux feuilles constitués par les entités de gestion, en particulier l'entité de transformation présente dans la passerelle GTW.

Le système comprend une entité de transformation référencée n-CDN qui reçoit le flux multicast diffusé en temps réel (ou Live) et le découpe en segments ; après production des segments, l'entité de transformation met à disposition les segments au dispositif de lecture STB en mode Unicast. L'entité de transformation n-CDN crée des fichiers de description en conséquence. Le dispositif de lecture STB peut ainsi accéder aux fichiers de description et aux segments de contenu décrits dans ces fichiers grâce à l'entité de transformation de flux référencée n-CDN sur les figures.

La localisation de l'entité de transformation n-CDN dans le système est quelconque. Dans notre exemple, cette entité de transformation est localisée dans la passerelle GTW.

Du point de vue du dispositif de lecture STB une entité de transformation forme donc l'entrée du réseau de diffusion de contenu, CDN. Une telle entité de transformation peut ainsi correspondre à la terminologie « nano CDN » ou « n-CDN », connue de l'homme du métier.

En définitive, pour simplifier l'exposé, le dispositif de lecture STB dispose deux sources de contenus, une première source n-CDN basé sur un flux multicast et une deuxième source qui est le serveur unicast SU ; la première source n-CDN étant connectée au serveur multicast et fournissant des segments en temps réel à la base d'un flux de données temps réel issu du serveur multicast ; la deuxième source SU fournissant des segments en différé.

On suppose que la réception du flux de segments s'effectue à un instant donné depuis la source n-CDN. Ce mode de transmission est souvent privilégié lorsqu'un tel flux est disponible du fait des performances du mode multicast par rapport au mode unicast en termes de bande passante sur le réseau et de la qualité d'images.

On suppose que, lors de la réception des segments du contenu depuis la source n-CDN, un utilisateur requiert un retour en arrière dans le contenu. Dans ce cas, l'entité de gestion ENT déclenche une demande de réception des segments depuis le serveur unicast. Le dispositif de lecture STB reçoit ensuite depuis le serveur unicast SU les segments depuis l'instant de relecture souhaité.

En définitive, la source n-CDN est une première source de contenus, et le serveur unicast SU est une deuxième source de contenus ; ces deux sources sont aptes à transmettre des segments avec un décalage temporel.

Aussi, d'une manière générale, les segments sont lus avec une vitesse de lecture donnée, dite vitesse de référence.

Selon l'invention, lors de la lecture du contenu issu de la source n-CDN, une réception d'une commande de retour en arrière dans le contenu est suivie d'une lecture de segments issus de la source SU avec une vitesse modifiée par rapport à la vitesse de référence ; ensuite dès que les segments à lire sont disponibles depuis la source n-CDN, la lecture reprend à la base des segments issus de la source n-CND.

La vitesse modifiée, qui peut varier dans le temps est choisie de telle sorte à rattraper le flux issu de la deuxième source le plus vite possible sans perturber l'utilisateur qui visualise l'écran, le but étant de reprendre la lecture du contenu à la base des segments issus de la première source n-CDN le plus vite possible.

De préférence, la vitesse supérieure est choisie de telle sorte à ce que la différence entre une restitution avec une vitesse de référence et une restitution avec une vitesse supérieure soit quasi imperceptible pour l'œil humain. Il ne faut en effet pas confondre une lecture accélérée et une avance rapide dans le contenu.

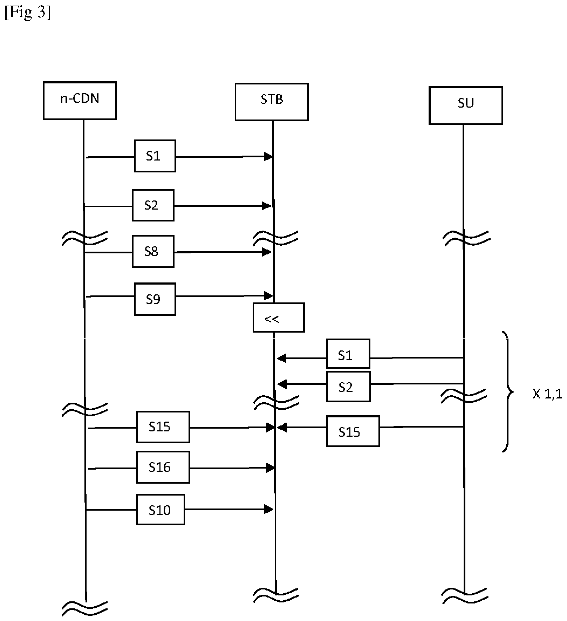

Un mode de réalisation va maintenant être décrit en référence à la figure 3.

Cette figure 3 illustre un chronogramme pour un exemple de mise en œuvre d'un procédé entre un dispositif de lecture STB, une source SU apte à transmettre le contenu en mode unicast et une source n-CDN recevant des flux multicast depuis le serveur multicast SM ; la source n-CDN va produire des segments du contenu en temps réel et les mettre à disposition.

Dans le mode de réalisation, afin de simplifier l'exposé, on ne décrira ni la transmission des fichiers de description ni la transmission de requêtes d'accès aux segments. On comprendra que chaque réception de segment est précédée d'une requête d'accès au segment. On comprendra aussi que des fichiers de description sont transmis par les deux sources afin que les dispositifs de lecture STB puissent accéder aux segments.

Dans un premier temps, le dispositif de lecture STB transmet des requêtes d'accès successives à des segments S1-S9 à destination de l'entité de transformation n-CDN et reçoit en retour les segments demandés S1-S9 successivement.

Lors de la réception d'une requête, l'entité de transformation n-CDN s'abonne au flux multicast souhaité auprès du serveur multicast SM et reçoit en retour un flux de données multicast. L'entité de transformation n-CDN transforme ensuite le flux continu en segments encodés et met à disposition ces segments.

On suppose que, lors de la réception des segments du contenu depuis l'entité de transformation n-CDN, un utilisateur requiert à un instant donné un retour en arrière (<<) dans le contenu.

Le dispositif de lecture STB reçoit la commande de retour (<<) , la commande incluant un identifiant de segment particulier à partir duquel la lecture doit être reprise. Dans notre exemple une relecture depuis le début à savoir le premier segment S1 est demandé.

Dans notre exemple, seul le serveur unicast SU est capable de lire un contenu en différé. Le dispositif de lecture STB exécute la commande et requiert la réception des segments à partir du segment S1 depuis le serveur unicast SU.

Selon l'invention, lors du passage d'une réception du contenu du serveur multicast MC au serveur SU, le dispositif de lecture STB modifie la vitesse de lecture des segments issus du serveur unicast SU.

On comprendra dans la suite qu'une accélération de la lecture nécessite un téléchargement de segments à avec une fréquence plus importante et qu'une lecture d'un segment s'effectuera plus rapidement. Une vidéo étant une succession d'images, accélérer la lecture consistera par exemple à afficher des images d'un segment moins longtemps qu'à la normale ; ou à extraire des images du segments choisies judicieusement de manière à lire qu'un sous-ensemble d'images d'un segment et donc accélérer la lecture du segment concerné tout en garantissant la compréhension du contenu.

Dans notre exemple, le dispositif de lecture STB continue à recevoir les segments issus de la source n-CDN pendant la lecture accélérée du contenu depuis le serveur unicast SU.

Pendant la lecture accélérée du contenu, phase référencée (x1,1) sur la figure 3, les requêtes d'accès s'effectuent à une fréquence plus élevée du fait que les segments sont lus plus rapidement.

A un instant donné, le segment S15 est reçu à la fois du serveur unicast SU ainsi que de la source n-CDN. Le dispositif de lecture STB, sous-entendu l'entité de gestion ENT, privilégie le segment S15 issu de la source n-CDN pour les raisons expliquées ci-dessus. A réception, le dispositif de lecture STB décode le segment S15 reçu de la source n-CDN et requiert la restitution des images du segment S15 ; le dispositif de lecture STB poursuit ensuite la lecture à la base de segments S16/S17/etc. issus de la source n-CDN.

A noter que l'exemple qui précède se base sur une relecture depuis le début. Cependant, l'invention s'applique aussi à une relecture depuis un autre instant ; par exemple la lecture des segments issus du serveur unicast aurait pu démarrer au troisième segment S3.

On comprend donc de ce qui précède que suite à l'exécution de la commande retour (symbole utilisé sur la plupart des appareils « << »), le dispositif de lecture STB s'abonne au flux Unicast et va tenter tout au long de la lecture accélérée à la base des segments reçus du serveur unicast de se raccrocher au flux transmis par la source n-CDN sous-entendu le serveur multicast SM avec lequel la source n-CDN communique. Ainsi, comme on l'a vu ci-dessus, lorsque la lecture du flux Live en décalé (consommé en Unicast) aboutit sur des segments du contenu issu de la source n-CDN ; le dispositif de lecture STB arrête alors de recevoir le flux en Unicast et utilise les segments provenant de la source n-CDN.

### Prenons un exemple concret :

Un programme débute à 21h00 et dure 1h45.

Supposons que l'utilisateur accède à 21h05 à un programme télévisé diffusé en direct. Le flux est ici transmis en multicast depuis le serveur multicast SM et transmis jusque la passerelle où la source n-CDN transforme le flux multicast en flux unicast.

Supposons que l'utilisateur active la fonction « StartOver » et accède au Live en décalé de 5 minutes. Suite à la réception d'une commande de retour de 5 minutes, le dispositif de lecture STB s'abonne au flux unicast issu du serveur unicast SU pour accéder au contenu en décalé. A cet instant, selon un mode de réalisation, le dispositif de lecture STB accélère la lecture des segments issus du serveur unicast SU.

Après avoir visualisé quelques minutes de contenu en Unicast, le temps de rattraper les segments issus de la source n-CDN, la lecture atteint un segment en unicast qui correspond au segment à lire issu de la source n-CDN. Le dispositif de lecture STB va alors se désabonner du flux Unicast auprès du serveur unicast SU et poursuivre la lecture des segments issus de la source n-CDN, ce dernier s'abonnant au flux multicast concerné.

En définitive, sur 1H45 de programme, quelques minutes de programme ont été reçus en Unicast. Le reste du temps, les segments reçus sont ceux créés à la base du flux multicast. On optimise ainsi la consommation de bande passante dans le réseau LI1 de l'opérateur.

Le mode de réalisation décrit ci-dessus peut faire l'objet de variantes.

Selon une première variante, l'entité de gestion ENT obtient une donnée représentative d'un rattrapage possible du flux multicast. Dans cette configuration, l'entité de gestion ENT décide d'accélérer ou non la lecture des segments reçus en unicast depuis le serveur unicast SU. On comprend bien ici qu'une accélération n'a d'intérêt que si un rattrapage est possible et qu'une non prise en compte d'une impossibilité entraîne un traitement inapproprié et consommateur en ressource processeur.

Selon une autre variante, la vitesse de lecture depuis la source unicast SU avec une vitesse accélérée est temporisée d'une durée qui est fonction de l'instant de lecture souhaité en différé inclut dans la commande de retour.

Selon une autre variante, la durée de temporisation est égale à la durée du retour en arrière dans le contenu. Par exemple, si un retour de 5 minutes est souhaité, la lecture s'effectue à la vitesse de référence pendant 5 minutes et la vitesse de lecture est accélérée ensuite pour rattraper le flux issu du serveur multicast SM et reprendre la lecture des segments issus de la source n-CDN. En définitive, le but de cette invention est de limiter l'usage du serveur unicast SU ; Quand un retour arrière relativement peu profond en temps est requis, une lecture légèrement accélérée permet de revenir au flux Live au plus vite. Grâce à l'invention, la bande passante économisée sur le réseau de l'opérateur LI1 est importante.

Il ressort bien de ce qui précède que les sources SU et n-CDN fournissent des segments associés à des qualités d'images respectives. Selon un mode de réalisation, la poursuite de la lecture, visée ci-dessus, de segments issus de la première source n-CDN est réalisée que si les segments à lire sont disponibles depuis la première source n-CDN et si les segments concernés ont une qualité d'image supérieure à la qualité d'image des segments issus de la deuxième source SU). Ce mode assure une qualité optimale de restitution en choisissant la source qui fournit des segments avec la meilleure qualité. En d'autres mots, lorsqu'à un instant t, les segments à lire sont disponibles à la fois depuis le serveur unicast et le serveur multicast, la lecture accélérée ayant permis de rattraper le flux multicast, la poursuite de la lecture depuis le flux multicast peut être réalisée sous condition. Une vérification est réalisée au cours de laquelle l'entité compare la qualité des segments issus du flux multicast avec la qualité des segments issus du flux unicast ; si la qualité des segments issus du flux multicast est supérieure, alors la poursuite de la lecture s'effectue en lisant des segments du flux multicast ; il y a dans ce cas un passage de la lecture du flux unicast vers le flux multicast. Si au contraire, la qualité des segments issus du flux multicast est inférieure à la qualité des segments du flux unicast, alors la poursuite de la lecture s'effectue en poursuivant la lecture à la base de segments issus du flux unicast. En définitive, au cours d'une lecture du contenu depuis une première source (n-CDN) avec une vitesse de lecture, dite vitesse de référence, une réception d'une commande de retour en arrière dans le contenu est suivie d'une lecture de segments depuis une deuxième source SU avec une vitesse différente de la vitesse de référence, et d'une poursuite de la lecture de segments issus de la première source n-CDN lorsque les segments à lire sont disponibles depuis la première source (n-CDN) et lorsque les segments concernés issus de la première source ont une qualité d'image supérieure à la qualité d'image des segments issus de la deuxième source (SU).

Rappelons ici qu'une qualité d'image est le plus souvent exprimée en kb/s. A titre d'exemple, les qualités les plus courantes correspondent aux débits 400 kb/s (kilobits par seconde), 800 kb/s, 1200 kb/s, 2100 kb/s, 3000 kb/s, etc. Précisons enfin que lorsque le dispositif de lecture STB dispose d'une bande passante de 3000 kb/s, il peut demander le contenu à n'importe quel débit inférieur à cette limite, par exemple 2100 kb/s.

Précisons enfin ici que le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de la lecture par un dispositif de lecture de segments d'un contenu accessibles depuis des sources de contenu aptes à transmettre des segments d'un même contenu avec un décalage temporel, **caractérisé en ce qu'**au cours d'une lecture du contenu depuis une première source (n-CDN) avec une vitesse de lecture, dite vitesse de référence, une réception d'une commande de retour en arrière dans le contenu est suivie d'une lecture de segments depuis une deuxième source (SU) avec une vitesse différente de la vitesse de référence, et d'une poursuite de la lecture de segments issus de la première source (n-CDN) lorsque les segments à lire sont disponibles depuis la première source (n-CDN).

2. Procédé de gestion selon la revendication 1, **caractérisé en ce qu'**une lecture avec une vitesse différente est effectuée que si la durée de retour en arrière est inférieure à une durée donnée, dite première durée.

3. Procédé de gestion selon la revendication 1, **caractérisé en ce que** la lecture de segments depuis la deuxième source (SU) s'effectue initialement avec la vitesse de référence et **en ce qu'**une une vitesse différente est utilisée après une durée donnée, dite deuxième durée.

4. Procédé de gestion selon la revendication 3, **caractérisé en ce que** la deuxième durée est égale à la durée du retour dans le contenu.

5. Procédé de gestion selon la revendication 1, **caractérisé en ce que** la première source transmet le contenu en temps réel et la deuxième source est apte à transmettre le contenu en différé.

6. Procédé de gestion selon la revendication 1, **caractérisé en ce que** la première source est une entité de transformation transformant un flux multicast reçu d'un serveur multicast en un flux unicast.

7. Procédé de gestion selon la revendication 1, **caractérisé en ce que** les sources (SU, n-CDN) fournissent des segments avec des qualités d'images respectives, et **en ce que** ladite poursuite de la lecture de segments issus de la première source (n-CDN) est réalisée lorsque les segments à lire sont disponibles depuis la première source (n-CDN) et lorsque les segments concernés ont une qualité d'image supérieure à la qualité d'image des segments issus de la deuxième source (SU).

8. Entité de gestion de la lecture par un dispositif de lecture de segments d'un contenu accessibles depuis des sources de contenu aptes à transmettre des segments d'un même contenu avec un décalage temporel, l'entité comprenant un processeur configuré pour, au cours d'une lecture du contenu depuis une première source (n-CDN) avec une vitesse de lecture, dite vitesse de référence, suite à la réception d'une commande de retour en arrière dans le contenu, lire les segments depuis une deuxième source (SU) avec une vitesse différente de la vitesse de référence, la lecture du contenu se poursuivant en lisant des segments issus de la première source (n-CDN) lorsque les segments à lire sont disponibles depuis la première source (n-CDN).

9. Dispositif de lecture dispositif de lecture (STB) comprenant une entité telle que définie dans la revendication 8.

10. Programme d'ordinateur apte à être mis en œuvre sur une entité de gestion (ENT) telle que définie dans la revendication 8, le programme comprenant des instructions de code qui, lorsqu'il est exécuté par un processeur, réalise les étapes du procédé définies dans la revendication 1.

11. Support de données sur lequel a été mémorisée au moins une série d'instructions de code de programme pour l'exécution d'un procédé selon la revendication 1
